# EUROPEAN PATENT SPECIFICATION

(11) **EP 1 534 393 B1**
(45) Date of publication and mention of the grant of the patent: **14.02.2007**
(21) Application number: 03787924.4
(22) Date of filing: 19.08.2003
(51) Int. Cl.: A62C 2/12, A62C 2/24

(54) **THERMALLY-ACTUATED CARTRIDGE AND FIRE DAMPER**
WÄRMEBETÄTIGTE PATRONE UND FEUERABSPERRVORRICHTUNG
CARTOUCHE A DECLENCHEMENT THERMIQUE ET CLAPET COUPE-FEU

(30) Priority: 19.08.2002 GB 0219297
(43) Date of publication of application: 01.06.2005
(73) Proprietor: Kent Tooling & Components Limited, Canterbury Kent, CT4 5SS (GB)
(72) Inventor: PERRIN, Richard, Canterbury, Kent CT4 5SS (GB)
(74) Representative: Luckhurst, Anthony Henry William
(86) International application number: PCT/GB2003/003651
(87) International publication number: WO 2004/016319

(56) References cited:
- GB-A- 2 255 014
- US-A- 4 559 867
- US-A- 4 625 626
- US-A- 4 958 687

## Description

The present invention relates generally to thermally-actuated cartridges for fire dampers for airflow ducts, but also relates more generally to any thermally-actuated mechanism and any damper for airflow ducts.

WO 02/43810 and EP 0300992 disclose the use of thermal cartridges for closing the damper element of a fire damper in an airflow duct. There can be problems with the cartridge if it is wrongly installed. For instance, if it is screwed in too tightly, the solder (or other heat-softenable or meltable material) can rupture, but there is no indication that this has occurred so that if there is a fire, the damper element does not close.

US 4958687 describes a fire damper having a duct, a flap rotatable about an axis crossing the duct, an engaging member to hold the flap open and a spring ordinarily urging the flat to rotate shut. The damper comprises a heat detecting and actuating member made of a form member alloy spring which when triggered moves the engaging member to allow the flap to close.

The installation of a member for carrying the cartridge and arranging for the retention of the damper element can give significant difficulty.

The present invention provides a thermally-actuated cartridge as set forth in Claim 1. The remaining Claims set forth preferred or optional features of the invention.

In Claim 1, the movable member protrudes through the opening when the cartridge is triggered. This has the advantage of indicating externally that an excessive temperature has been reached. However, there is also the advantage that if the cartridge is say screwed in too hard, and the solder ruptured, it is apparent from outside that the mechanism would be inoperative. In effect, the invention provides fail-safe operation. There is also the advantage that the protruding end portion of the movable member can be arranged to actuate a microswitch, which can give a warning signal.

Preferably the arrangement is such that when the cartridge or mechanism is set, the movable member does not protrude at all or substantially through the opening, the end of the movable member preferably being flush with the opening. In this way, a protruding end gives a clear signal that the cartridge or mechanism is not set. However, if the end of the movable member protrudes when the cartridge or mechanism is set, the end portion can be profiled or marked so that its movement is apparent.

The invention will be further described, by way of example, with reference to the accompanying drawings, in which:
Figure 1 is a part longitudinal section through a section of airflow ducting which forms a fire damper;
Figure 2 is a part longitudinal section along the plane II-II in Figure 1;
Figure 3 is an enlarged part-longitudinal section through the thermal cartridge shown in Figure 2, in the set configuration;
Figure 4 corresponds to Figure 3, but shows the cartridge when it has triggered;
Figure 5 shows the right-hand end of the U-shaped member (as seen looking in Figure 2), in section along the plane V-V indicated in Figure 2;
Figure 6 is a view of the end limb of Figure 5 looking in the direction of the arrow VI in Figure 5; and
Figure 7 is a section of the end limb taken along the line VII-VII in Figure 5.

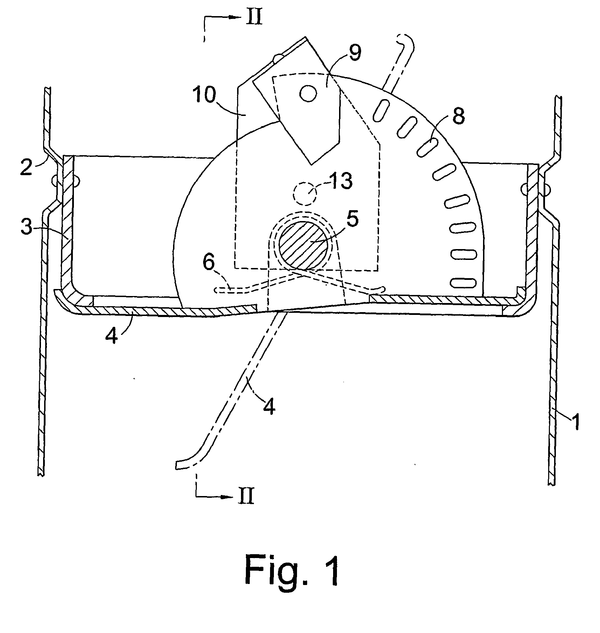

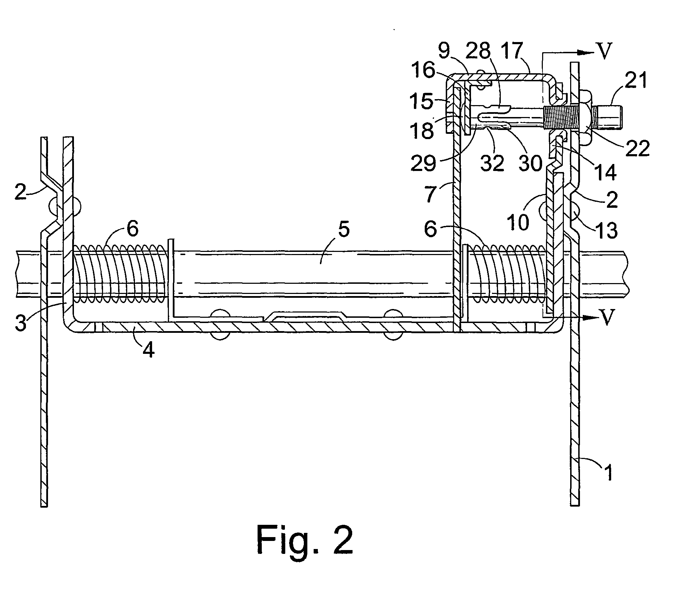

Figures 1 and 2 show ducting 1 for for instance an air-conditioning installation. A damper is provided by swaging the ducting 1 inwards at 2, riveting a cylindrical rim 3 to the swaged-in part 2 and pivoting a damper element or flap 4 on a transverse axle 5. In the closed position shown in full lines in Figure 1, the periphery of the flap 4 bears against the rim 3, effectively to close the duct. The fully open position of the flap 4 is indicated in chain-dotted lines in Figure 2. At the sides, the flap 4 is suitably cut away, generally as illustrated in WO 02/43810. Two helical springs 6 bias the flap 4 into its closed position.

A generally sector-shaped retention member or quadrant 7 is held in a slot in the flap 4 and secured by the axle 5 which passes through a hole in the quadrant 7 so that the quadrant 7 is fixed relative to the flap 4. The quadrant 7 has a series of cut-outs or notches 8 adjacent its periphery.

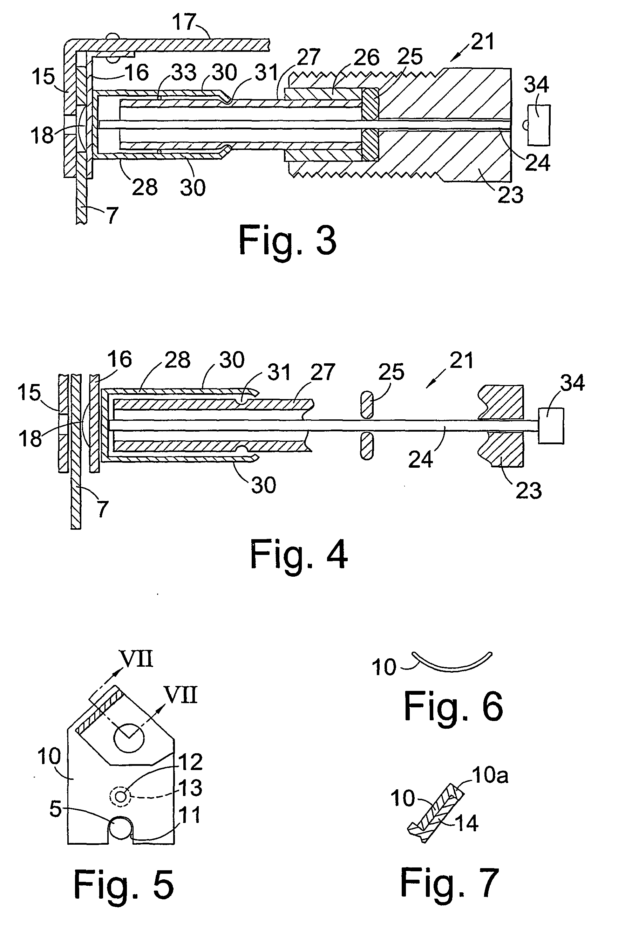

A U-shaped support member 9 is mounted in position in the following manner. The U-shaped support member 9 has at right angles thereto a profiled limb extension 10 which has a notch 11 in its lower end (see Figure 5) which locates over the axle 5 and has a bore 12 by which the extension 10 is secured to the inner circumference of the ducting 1 at the swaging 2 by securing means in the form of a rivet 13 (see Figure 2). The notch 5 ensures that the limb extension 10 is correctly aligned. The limb 14 of the support member 9 which is nearer the wall of the ducting 1 is swaged onto the end of the extension 10, as shown in Figure 2, thus fixing the limb extension 10 to the support member 9. The swaging is taken through a circular bore in the limb extension 10, and is tapped with a female thread. As can be seen in Figure 2, the extension 2 is suitably profiled. The part adjacent the axle 5 is curved to mate properly with the rim 3 (see Figure 6) and there is a small side flange 10a to engage the edge of the limb 14 (see Figure 7).

The other limb 15 of the support member 9 is internally of the quadrant 7. Externally of the quadrant 7, a sprung L-bracket 16 is riveted to the base 17 of the support member 9. The bracket 16 has pressed in it a dimple 18 which is roughly the same size as the cut-outs in the quadrant 7 and which, in the set position of the damper, engages in a cut-out 8.

A cartridge assembly 21 is passed through a hole in the ducting 1 and screwed into the tapped swaging of the limb 14, being held in place by a lock-nut 22. Though not shown, the lock-nut 22 is screwed up until the wall of the ducting 1 firmly abuts the swaging of the limb 14, the wall deforming to permit this. The cartridge assembly 21 is formed of a body member or cartridge holder 23 (see Figures 3 and 4) having a central bore accommodating a movable member in the form of a rod or pin 24 and a counter bore accommodating an O-ring 25 and a plastic sleeve 26. The O-ring 25 applies friction to the pin 24 and holds it in the assembly 21 (as an alternative, or in addition, ears can be formed on the pin 24 by swaging, to the left of the O-ring 25, as looking in Figure 2). The end of the pin 24 does not protrude substantially through the external opening in the holder 23, and the end of the pin 24 is preferably flush with the end face of the holder 23. The cartridge proper, in the form of a cylindrical casing 27, is pressed into and held by the sleeve 26. On the end of the casing 27 there is a detent body or claw holder 28 which has an actuating member or head in the form of a short end cap 29 (see Figure 2) carrying two elongate detents or claws 30. The claws have intumed ends which engage in an annular groove 31 in the casing 27. The claws 30 have circular openings 32 near their roots, to make them less rigid, and adjacent each opening 32 a heat-softenable or meltable (fusible) material in the form of solder 33 is applied so that it adheres both to the claws 30 and to the outside of the casing 27. As the force on the ends of the claws is always in a radial direction before the solder 33 melts, the solder 33 is under tension.

In order to set the fire damper, the flap 4 is opened using a key and is held at a suitable inclination. The cartridge assembly 21 is then screwed in and the flap 4 positioned so that the dimple 18 engages in a cut-out 8. The end cap 29 should abut firmly against the spring bracket 16, which acts as an engaging member, pressing the quadrant 7 against the limb 15, which then acts as a backing piece, thereby securing the quadrant 7 and holding the flap 4 in an open position. The lock nut 22 is applied.

If the temperature rises excessively, the solder 33 melts. The springs 6 are sufficiently strong to cam the dimple 18 out of the cut-out 8, pushing the claw holder 28 to the right as shown in Figure 3 and camming the ends of the claws 30 out of the groove 31 (in a radial direction) so that the configuration is as shown in Figure 4. The movement of the claw holder 28 causes the pin 24 to move to the right (as shown in Figure 4) and its end now protrudes from the cartridge holder 23. This indicates that the cartridge assembly 21 is no longer set. If desired, a microswitch 34 can be mounted so as to be actuated by the pin 24, to give a signal.

In a variation of the arrangement, not illustrated, there is no thermal cartridge as such. The O-ring 25 is replaced by a disc and the rod 24 suitably shortened and the casing 27 is arranged so as to abut directly on the spring bracket 16. The rod 24 is connected to a solenoid which, when energised, applies a constant force on the rod 24, urging it to the left in Figure 3 and holding the flap 4 open. For adjustment or on an excessive temperature rise, the solenoid is de-energised, the rod 24 moves to the right and the flap 4 is freed.

In a further variation, not illustrated, where the thermal cartridge is not wanted, the same basic arrangement can be used. It would be possible to use a dummy cartridge with equivalent proportions, but in practice, the cartridge is omitted and a longer pin 24 is used. The left-hand end of the pin engages in the dimple 18 and the right-hand end of the pin 24 can be acted on by say a solenoid. In this case, as the right-hand end of the pin 24 will protrude all the time, it can have steps formed in it or can be marked with say red paint to give an indication whether the arrangement is set or not. If as in yet a further variation, the spring bracket 16 is omitted, the pin 24 can act both as the moving member and as the engaging member and engage in one of the cut-outs 8.

### Example

In one preferred example, the following components were used:
Spring bracket 16 - spring quality stainless steel;
U-member 9 - plated mild steel;
Casing 27-7 mm diameter, brass;
Claw holder 28 - brass;
Cartridge holder 23 - mild steel, plated;
O-ring 25 - neoprene;
Plastic sleeve 26 - PVC;
Solder - melting point preferably 72°C, but according to installation requirements, up to 102°C;
Centre bore in cartridge holder 23 - nominal 4 mm;
Pin 24 - nominal 4 mm, stainless steel;
Movement of claw holder 28 - 2 mm;
Diameter of cartridge holder 23 - 12.5 mm;
Depth of swaging 2 - 2.5 mm.

Unless the context clearly requires otherwise, throughout the description and the Claims, the words "comprise" and the like are used in an inclusive as opposed to an exclusive or exhaustive sense, that is to say, in the sense of "include, but not limited to".

## Claims

1. A damper for an air flow duct comprising:
ducting (1);
a damper element (4) in the ducting (1) and movable between a first, closed position and a second, open position;
biasing means (6) biasing the damper element (4) into its closed position; and
retention means for retaining the damper element (4) in an open position;
the retention means **characterised by** comprising:
an actuating member (29);
a retention member (7) which is fixed relative to the damper element (4) and can be secured by the action of the actuating member (29) to retain the damper element (4) in an open position, which securing can be released by movement of the actuating member (29) to release the damper element (4) so that the latter is moved by the biasing means (6) into its closed position;
a body member (23) which is fixed to an opening in a circumferential wall of the ducting (1), the body member (23) having a through-hole which passes from an exterior to an interior of the body member (23); and
a movable member (24) in the through-hole and arranged so that it moves when the actuating member (29) moves, the movable member (24) being arranged such that it protrudes or protrudes further from an opening in the exterior of the body member (23) when the actuating member (24) moves to release the damper element (4).

2. A damper as claimed in claim 1, wherein the actuating member (29) comprises a temperature-sensitive element (33) for releasing the retention member (7) to release the damper element (4) when the temperature-sensitive element (33) reaches a certain temperature.

3. A damper as claimed in claim 1 or 2, wherein the movable member (24) is an axially-movable rod (24).

4. A damper as claimed in claim 1, 2 or 3, wherein the body member (23) comprises a cylindrical casing (27) mounted by a mounting member (23), said opening in the exterior of the body member (23) being in the mounting member (23).

5. A damper as claimed in any one of claims 2, 3 or 4, wherein the body member (23) is extended, the temperature-sensitive element (33) being adjacent one end of the body member (23) and the opening in the exterior of the body member (23) being adjacent the other end of the body member (23).

6. A damper as claimed in claim 4 or 5, wherein the casing (27) is an elongate cylinder and the mounting member (23) is cylindrical with a bore in one end receiving an end portion of the cylinder (27), said opening in the exterior of the body member (23) being at the other end.

7. A damper as claimed in any one of claims 2 to 6, wherein the temperature-sensitive element (33) comprises a heat-softenable or meltable material (33) which when hard prevents movement of the movable member (24) and when soft or molten permits movement of the movable member (24).

8. A damper as claimed in any one of claims 2 to 7, the retention means further comprising a head (28), the temperature-sensitive element (33) being such that the head (29) can move relative to the casing (27) when said certain temperature is reached, the movable member (24) being in contact with or being contactable by the head (28) when the head (28) moves so that the movement of the head (28) causes the movable member (24) to move and protrude or protrude further through said opening.

9. A damper as claimed in claim 8 according to claim 7, wherein the casing (27) has a recess (31), the movable member (24) is within the casing (27), and the head (28) has a detent engaging in the recess (31) such that when the heat-softenable or meltable material (33) is soft or molten, a force on the head (28) in a direction of its movement with respect to the casing (27) would cam the detent out of the recess (31) in a direction generally at right angles to the direction of movement of the head (28) and release the head (28), thereby causing the movable member (24) to move, the heat-softenable or meltable material (33) being between the detent and the casing (27) and being such that said force applies a force on the heat-softenable or meltable material (33) generally at right angles to the direction of movement of the head (28).

10. A damper as claimed in claim 9, wherein the heat-softenable or meltable material (33) is in tension under the action of said force on the head (28),

11. A damper as claimed in claim 8, 9 or 10, wherein the head comprises an end piece (29) which is adjacent or abuts the end of the movable member (24), the end piece (29) having elongate detents which extend outside the casing (27) and parallel to the movable member (24).

12. A damper as claimed in any one of the preceding claims, the retention means further comprising a fixed backing piece (15) on the other side of the retention member (7) to the movable member (24) so that the movable member (24) can press the retention member (7) against the backing piece (15).

13. A damper as claimed in any one of the preceding claims, the retention means further comprising a sprung piece (16) fixed to the ducting (1) and acting as an engaging member such that the actuating member (29) can engage the sprung piece (16) to press the sprung piece (16) against the retention member (7).

14. A damper as claimed in any one of the preceding claims, wherein the damper element (4) is rotatably mounted for movement between its closed position and an open position, and the retention member (7) is generally sector shaped.

15. A damper as claimed in any one of the preceding claims, wherein the retention member (7) has a number of recesses or cut-outs (8) for engagement directly or indirectly by the actuating member (29), to provide a number of different open positions of the damper element (4), of various degrees of opening, a camming arrangement being provided so that the respective recess or cut-out (8) will cease to be engaged and the damper element (4) will move into its closed position when the actuating member (29) exerts no pressure on the retention member (7).

16. A damper as claimed in any one of the preceding claims, wherein the protruding end portion of the movable member (14) actuates a microswitch (34).

17. A damper as claimed in any one of the preceding claims, wherein the body member (23) and movable member (24) are in the form of a removable cartridge (21).

18. A damper as claimed in any one of the preceding claims, wherein the retention member (7) is releasable by acting externally on said movable member (24),

19. A damper as claimed in claim 18, wherein the movable member (24) is biased inwards by external biasing means which can be released to release the retention member (7).

20. A damper as claimed in claim 19, wherein the external biasing means is a solenoid.

## Patentansprüche

1. Klappe für einen Luftführungskanal, die Folgendes umfasst:
eine Luftführung (1);
ein Klappenelement (4) in der Luftführung (1), das zwischen einer ersten, geschlossenen Stellung und einer zweiten, offenen Stellung bewegbar ist;
Vorspannmittel (6), die das Klappenelement (4) in seine geschlossene Stellung vorspannen; und
Haltemittel zum Festhalten des Klappenelements (4) in einer offenen Stellung;
wobei die Haltemittel **dadurch gekennzeichnet sind, dass** sie Folgendes umfassen:
ein Stellelement (29) ;
ein Halteelement (7), das relativ zum Klappenelement (4) fixiert ist und durch die Funktion des Stellelements (29) befestigt werden kann, um das Klappenelement (4) in einer offenen Stellung zu halten, wobei diese Befestigung durch Bewegen des Stellelements (29) zum Lösen des Klappenelements (4) gelöst werden kann, so dass Letzteres von den Vorspannmitteln (6) in seine geschlossene Stellung bewegt wird;
ein Körperstück (23), das an einer Öffnung in einer Umfangswand der Luftführung (1) fixiert ist, wobei das Körperstück (23) ein durchgehendes Loch aufweist, das von einem Äußeren zu einem Inneren des Körperstücks (23) verläuft; und
ein bewegliches Element (24) in dem durchgehenden Loch, das so angeordnet ist, dass es sich bewegt, wenn sich das Stellelement (29) bewegt, wobei das bewegliche Element (24) so angeordnet ist, dass es aus einer Öffnung im Äußeren des Körperstücks (23) vorspringt oder weiter vorspringt, wenn das Stellelement (24) sich bewegt, um das Klappenelement (4) zu lösen.

2. Klappe nach Anspruch 1, bei der das Stellelement (29) ein temperaturempfindliches Element (33) zum Lösen des Halteelements (7) umfasst, um das Klappenelement (4) zu lösen, wenn das temperaturempfindliche Element (33) eine bestimmte Temperatur erreicht.

3. Klappe nach Anspruch 1 oder 2, bei der das bewegliche Element (24) eine axial bewegliche Stange ist.

4. Klappe nach Anspruch 1, 2 oder 3, bei der das Körperstück (23) ein mit einem Befestigungselement (23) montiertes zylindrisches Gehäuse (27) umfasst, wobei sich die Öffnung im Äußeren des Körperstücks (23) im Befestigungselement (23) befindet.

5. Klappe nach einem der Ansprüche 2, 3 oder 4, bei der das Körperstück (23) verlängert ist, wobei das temperaturempfindliche Element (33) sich neben einem Ende des Körperstücks (23) befindet und die Öffnung im Äußeren des Körperstücks (23) sich neben dem anderen Ende des Körperstücks (23) befindet.

6. Klappe nach Anspruch 4 oder 5, bei der das Gehäuse (27) ein länglicher Zylinder ist und das Befestigungselement (23) zylindrisch ist mit einer Bohrung in einem Ende, die einen Endabschnitt des Zylinders (27) aufnimmt, wobei die Öffnung im Äußeren des Körperstücks (23) sich am anderen Ende befindet.

7. Klappe nach einem der Ansprüche 2 bis 6, bei der das temperaturempfindliche Element (33) ein durch Wärme erweichbares oder schmelzfähiges Material (33) umfasst, das im harten Zustand die Bewegung des beweglichen Elements (24) verhindert und im weichen oder geschmolzenen Zustand die Bewegung des beweglichen Elements (24) zulässt.

8. Klappe nach einem der Ansprüche 2 bis 7, wobei das Haltemittel ferner einen Kopf (28) umfasst, wobei das temperaturempfindliche Element (33) dergestalt ist, dass der Kopf (29) sich relativ zum Gehäuse (27) bewegen kann, wenn die bestimmte Temperatur erreicht wird, wobei das bewegliche Element (24) mit dem Kopf (28) in Berührung ist oder von ihm berührt werden kann, wenn der Kopf (28) sich bewegt, so dass die Bewegung des Kopfes (28) verursacht, dass sich das bewegliche Element (24) bewegt und durch die Öffnung vorspringt oder weiter vorspringt.

9. Klappe nach Anspruch 8 gemäß Anspruch 7, bei der das Gehäuse (27) eine Aussparung (31) hat, das bewegliche Element (24) sich im Gehäuse (27) befindet und der Kopf (28) eine in der Aussparung (31) einrastende Arretierung hat, so dass, wenn das durch Wärme erweichbare oder schmelzfähige Material (33) weich oder geschmolzen ist, eine Kraft auf den Kopf (28) in Richtung seiner Bewegung in Bezug auf das Gehäuse (27) die Arretierung in einer Richtung, die allgemein im rechten Winkel zur Bewegungsrichtung des Kopfs (28) ist, kurvengesteuert aus der Aussparung (31) herausführen würde und den Kopf (28) lösen würde, wodurch das bewegliche Element (24) zum Bewegen veranlasst würde, wobei sich das durch Wärme erweichbare oder schmelzfähige Material (33) dann zwischen der Arretierung und dem Gehäuse (27) befindet und so ist, dass die Kraft eine Kraft auf das durch Wärme erweichbare oder schmelzfähige Material (33) allgemein im rechten Winkel zur Bewegungsrichtung des Kopfes (28) ausübt.

10. Klappe nach Anspruch 9, bei der das durch Wärme erweichbare oder schmelzfähige Material (33) unter der Wirkung der Kraft auf den Kopf (28) auf Zug beansprucht ist.

11. Klappe nach Anspruch 8, 9 oder 10, bei der der Kopf ein Endstück (29) umfasst, das sich neben dem Ende des beweglichen Elements (24) befindet oder an ihm anliegt, wobei das Endstück (29) längliche Arretierungen hat, die sich außerhalb des Gehäuses (27) und parallel zum beweglichen Element (24) erstrecken.

12. Klappe nach einem der vorhergehenden Ansprüche, bei der das Haltemittel ferner ein festes Gegenstück (15) auf der anderen Seite des Halteelements (7) zum beweglichen Element (24) umfasst, so dass das bewegliche Element (24) das Halteelement (7) gegen das Gegenstück (15) pressen kann.

13. Klappe nach einem der vorhergehenden Ansprüche, bei der das Haltemittel ferner ein gefedertes Stück (16) umfasst, das an der Luftführung (1) fixiert ist und als Einrastelement wirkt, so dass das Stellelement (29) mit dem gefederten Stück (16) in Eingriff kommen kann, um das gefederte Stück (16) gegen das Halteelement (7) zu pressen.

14. Klappe nach einem der vorhergehenden Ansprüche, bei der das Klappenelement (4) zur Bewegung zwischen seiner geschlossenen Stellung und einer offenen Stellung drehbar befestigt ist und das Halteelement (7) allgemein sektorförmig ist.

15. Klappe nach einem der vorhergehenden Ansprüche, bei der das Halteelement (7) eine Anzahl von Aussparungen oder Ausnehmungen (8) für den direkten oder indirekten Eingriff des Stellelements (29) hat, um eine Anzahl verschiedener offener Stellungen des Klappenelements (4) mit diversen Öffnungsgraden bereitzustellen, wobei eine Kurvensteuerungsanordnung bereitgestellt ist, so dass die jeweilige Aussparung oder Ausnehmung (8) nicht mehr in Eingriff genommen wird und das Klappenelement sich in seine geschlossene Stellung bewegt, wenn das Stellelement (29) keinen Druck auf das Halteelement (7) ausübt.

16. Klappe nach einem der vorhergehenden Ansprüche, bei der der vorspringende Endabschnitt des beweglichen Elements (14) einen Mikroschalter (34) betätigt.

17. Klappe nach einem der vorhergehenden Ansprüche, bei der das Körperstück (23) und das bewegliche Element (24) die Form einer entfernbaren Patrone (21) haben.

18. Klappe nach einem der vorhergehenden Ansprüche, bei der das Halteelement (7) durch externes Wirken auf das bewegliche Element (24) gelöst werden kann.

19. Klappe nach Anspruch 18, bei der das bewegliche Element (24) von einem externen Vorspannmittel, das zum Lösen des Halteelements (7) gelöst werden kann, einwärts vorgespannt wird.

20. Klappe nach Anspruch 19, bei der das externe Vorspannmittel ein Hubmagnet ist.

## Revendications

1. Registre pour un conduit d'aération, comprenant:
une conduite (1);
un élément de registre (4) agencé dans la conduite (1) et pouvant se déplacer entre une première position fermée et une deuxième position ouverte;
un moyen poussoir (6), poussant l'élément de registre (4) dans sa position fermée; et
un moyen de retenue pour retenir l'élément de registre (4) dans une position ouverte;
le moyen de retenue étant **caractérisé en ce qu'**il comprend:
un élément d'actionnement (29);
un élément de retenue (7) fixé par rapport à l'élément de registre (4) et pouvant être fixé par l'intermédiaire de l'élément d'actionnement (29) pour retenir l'élément de registre (4) dans une position ouverte, cette fixation pouvant être dégagée par le déplacement de l'élément d'actionnement (29), pour dégager l'élément de registre (4), de sorte que ce dernier est déplacé par le moyen poussoir (6) dans sa position fermée;
un élément de corps (23) fixé sur une ouverture dans une paroi circonférentielle de la conduite (1), l'élément de corps (23) comportant un trou de passage passant d'un extérieur vers un intérieur de l'élément de corps (23); et
un élément mobile (24) dans le trou de passage, agencé de sorte à se déplacer lors du déplacement de l'élément d'actionnement (29), l'élément mobile (24) étant agencé de sorte à déborder ou à déborder davantage d'une ouverture dans l'extérieur de l'élément de corps (23) lors du déplacement de l'élément d'actionnement (24) pour dégager l'élément de registre (4).

2. Registre selon la revendication 1, dans lequel l'élément d'actionnement (29) comprend un élément sensible à la température (33) pour dégager l'élément de retenue (7), afin de dégager l'élément de registre (4) lorsque l'élément sensible à la température (33) atteint une certaine température.

3. Registre selon les revendications 1 ou 2, dans lequel l'élément mobile (24) est une tige à déplacement axial (24).

4. Registre selon les revendications 1, 2 ou 3, dans lequel l'élément de corps (23) comprend un boîtier cylindrique (27) monté par un élément de montage (23), ladite ouverture dans l'extérieur de l'élément de corps (23) étant dans l'élément de montage (23).

5. Registre selon l'une quelconque des revendications 2, 3 ou 4, dans lequel l'élément de corps (23) est étendu, l'élément sensible à la température (33) étant adjacent à une extrémité de l'élément de corps (23) et l'ouverture dans l'extérieur de l'élément de corps (23) étant adjacente à l'autre extrémité de l'élément de corps (23).

6. Registre selon les revendications 4 ou 5, dans lequel le boîtier (27) est un cylindre allongé, l'élément de montage (23) étant cylindrique et comportant un alésage dans une extrémité, recevant une partie d'extrémité du cylindre (27), ladite ouverture dans l'extérieur de l'élément de corps (23) étant au niveau de l'autre extrémité.

7. Registre selon l'une quelconque des revendications 2 à 6, dans lequel l'élément sensible à la température (33) comprend un matériau à ramollissement thermique ou à fusion (33) empêchant dans l'état dur le déplacement de l'élément mobile (24) et permettant dans l'état ramolli ou fondu le déplacement de l'élément mobile (24).

8. Registre selon l'une quelconque des revendications 2 à 7, l'élément de retenue comprenant en outre une tête (28), l'élément sensible à la température (33) étant tel que la tête (29) peut se déplacer par rapport au boîtier (27) lors de l'atteinte de ladite température définie, l'élément mobile (24) étant en contact ou pouvant être mis en contact avec la tête (28) lorsque la tête (28) se déplace, de sorte que le déplacement de la tête (28) entraîne le déplacement de l'élément mobile (24) et un débordement ou davantage de débordement à travers ladite ouverture.

9. Registre selon la revendication 8, dépendant de la revendication 7, dans lequel le boîtier (27) comporte un évidement (31), l'élément mobile (24) étant agencé dans le boîtier (27) et la tête (28) comportant un cran s'engageant dans l'évidement (31), de sorte que lorsque le matériau à ramollissement thermique ou à fusion (33) est ramolli ou fondu, une force appliquée à la tête (28) dans la direction de son déplacement par rapport au boîtier (27) veuille faire sortir le cran hors de l'évidement (31), dans une direction s'étendant en général à angle droit par rapport à la direction du déplacement de la tête (28) et dégage la tête (28), entraînant ainsi le déplacement de l'élément mobile (24), le matériau à ramollissement thermique ou à fusion (33) étant agencé entre le cran et le boîtier (27) et étant tel que ladite force applique une force au matériau à ramollissement thermique ou à fusion (33) orientée en général à angle droit par rapport à la direction du déplacement de la tête (28).

10. Registre selon la revendication 9, dans lequel le matériau à ramollissement thermique ou à fusion (33) est mis sous tension par l'intermédiaire de ladite force appliquée à la tête (28).

11. Registre selon les revendications 8, 9 ou 10, dans lequel la tête comprend une pièce d'extrémité (29) adjacente à l'extrémité de l'élément mobile (24) ou butant contre celle-ci, la pièce d'extrémité (29) comportant des crans allongés s'étendant hors du boîtier (27) et parallèlement à l'élément mobile (24).

12. Registre selon l'une quelconque des revendications précédentes, le moyen de retenue comprenant en outre une pièce de renfort fixée (15) sur l'autre côté de l'élément de retenue (7) sur l'élément mobile (24), de sorte que l'élément mobile (24) peut presser l'élément de retenue (7) contre la pièce de renfort (15).

13. Registre selon l'une quelconque des revendications précédentes, le moyen de retenue comprenant en outre une pièce élastique (16) fixée sur la conduite (1) et servant d'élément d'engagement, de sorte que l'élément d'actionnement (29) peut s'engager dans la pièce élastique (16) pour presser la pièce élastique (16) contre l'élément de retenue (7).

14. Registre selon l'une quelconque des revendications précédentes, dans lequel l'élément de registre (4) est monté de manière rotative en vue d'un déplacement entre sa position fermée et une position ouverte, l'élément de retenue (7) ayant en général une forme en secteur.

15. Registre selon l'une quelconque des revendications précédentes, dans lequel l'élément de retenue (7) comporte plusieurs évidements ou entailles (8) destinés à un engagement direct ou indirect par l'élément d'actionnement (29), pour fournir plusieurs positions ouvertes différentes de l'élément de registre (4), avec différents degrés d'ouverture, un agencement à came étant prévu de sorte à dégager l'évidement ou l'entaille respectif (8), l'élément de registre (4) se déplaçant ensuite dans sa position fermée lorsque l'élément d'actionnement (29) n'exerce pas de pression sur l'élément de retenue (7).

16. Registre selon l'une quelconque des revendications précédentes, dans lequel la partie d'extrémité en saillie de l'élément mobile (14) actionne un micro-rupteur (34).

17. Registre selon l'une quelconque des revendications précédentes, dans lequel l'élément de corps (23) et l'élément mobile (24) ont la forme d'une cartouche amovible (21).

18. Registre selon l'une quelconque des revendications précédentes, dans lequel l'élément de retenue (7) peut être dégagé par suite d'une action externe exercée sur ledit élément mobile (24).

19. Registre selon la revendication 18, dans lequel l'élément mobile (24) est poussé vers l'intérieur par un moyen poussoir externe pouvant être dégagé pour dégager l'élément de retenue (7).

20. Registre selon la revendication 19, dans lequel le moyen poussoir externe est un solénoïde.
